# EUROPÄISCHE PATENTSCHRIFT

(11) **EP 2 137 389 B1**
(45) Veröffentlichungstag und Bekanntmachung des Hinweises auf die Patenterteilung: **17.08.2011**
(21) Anmeldenummer: 08733801.8
(22) Anmeldetag: 17.04.2008
(51) Int. Cl.: F01N 13/18, F16L 23/032, F16L 23/036

(54) **VORRICHTUNG UND VERFAHREN ZUM VERBINDEN VON GEHÄUSEABSCHNITTEN BEI RUSSPARTIKELFILTERN**
DEVICE AND METHOD FOR CONNECTING HOUSING SECTIONS OF SOOT PARTICLE FILTERS
DISPOSITIF ET PROCÉDÉ DE JONCTION DE SECTIONS D'ENVELOPPE DANS DES FILTRES À PARTICULES DE SUIE

(30) Priorität: 20.04.2007 CH 668072007
(43) Veröffentlichungstag der Anmeldung: 30.12.2009
(73) Patentinhaber: Tehag AG, 8252 Schlatt (CH)
(72) Erfinder: FRANKEN, Bernhard, CH-8252 Schlatt (CH)
(74) Vertreter: Gachnang, Hans Rudolf
(86) Internationale Anmeldenummer: PCT/CH2008/000175
(87) Internationale Veröffentlichungsnummer: WO 2008/128370

(56) Entgegenhaltungen:
- EP-A- 0 396 151
- DE-A1- 3 146 219
- DE-A1-102005 021 646
- GB-A- 2 349 189
- US-A1- 2006 053 779

## Beschreibung

Gegenstand der Erfindung ist eine Vorrichtung und ein Verfahren zum Verbinden von Gehäuseabschnitten bei Russpartikelfiltern sowie eine Spannbride gemäss Oberbegriff der Patentansprüche 1, 6 und 7.

Bei Fahrzeugen mit Verbrennungsmotoren werden in zunehmendem Masse Filter und Katalysatoren zur Nachbehandlung der Abgase eingesetzt. Dadurch kann die Belastung der Umwelt mit Schadstoffen wie Russpartikeln, Kohlenwasserstoffen, Kohlenmonoxid oder Stickoxiden stark vermindert werden. Zur Nachbehandlung von Dieselabgasen sind auch katalytisch wirkende Russpartikelfilter bekannt, bei denen Russpartikel zuerst an der Filteroberfläche abgelagert und anschliessend - wenn die Temperatur genügend hoch ist - katalytisch umgewandelt werden. Filter und Katalysatoren umfassen in der Regel einen keramischen Träger bzw. Monolithen, der mit einem die Oberfläche vergrössernden so genannten Washcoat versehen ist. Dieser Monolith ist in einem metallischen Gehäuse bzw. dem so genannten Canning gelagert, welches fest in die Abgasleitung eingebaut ist.

Bei Diesel-Partikel-Filtern erfolgt die Verbrennung der Partikel in der Regel nicht vollständig rückstandsfrei. Im Motoröl und im Dieselkraftstoff enthaltene Additive können mit der Zeit zu einer Ascheablagerung im Filter führen. Ebenso führt der Metallabrieb im Motor zu Aschebildung. Diese erhöht den Abgasgegendruck des Filters und damit den Kraftstoffverbrauch. Russpartikelfilter müssen deshalb regelmässig gewartet bzw. gereinigt werden, z.B. jährlich oder nach Erreichen einer vorgegebenen Laufleistung. Für diesen Zweck müssen Russpartikelfilter von der Abgasleitung getrennt und nach der Reinigung wieder angeschlossen werden können.

Aus der DE 20012812 U1 ist eine Abgasreinigungsvorrichtung bekannt mit einem aus mehreren zylindrischen Modulen aufgebauten Gehäuse bekannt, bei dem in mindestens einem dieser Module eine Filtereinheit eingebaut ist. Die einzelnen Module können ineinander gesteckt sein oder mittels flanschartiger Befestigungselemente aneinander gefügt sein. Bei metallischen Gehäusen ist eine Verschweissung der Module zur gegenseitigen Befestigung vorgesehen. Da die Gehäusemodule miteinander verschweisst sind, kann die Filtereinheit nur entnommen werden, wenn das Gehäuse aufgetrennt wird. Selbst ohne Verschweissung beanspruchen Flansche, die am Gehäuse nach aussen ragen, viel Platz. Bei axial ineinander geschobenen Gehäusemodulen ist in Richtung der Gehäuseachse ebenfalls Platz und Bewegungsspielraum erforderlich, damit die einzelnen Module voneinander getrennt werden können.

Aus der WO 03/002306 A2 ist eine Gehäuseverbindung zum Verbinden von rohrförmigen Gehäuseabschnitten bei einem Abgassystem mit einem Russpartikelfilter bekannt. Die zylindrischen Gehäuseabschnitte umfassen in geringem axialem Abstand von ihren Enden je eine umlaufende Rippe, die als Anschlag für eine Spannklemme dienen. Die Rippen können direkt an den Gehäuseabschnitten ausgebildet sein oder alternativ an Adaptern, die im Endbereich an den zylindrischen Gehäuseabschnitten angeschweisst sind. Die miteinander verbundenen Gehäuseabschnitte haben leicht unterschiedliche Durchmesser und überlappen sich axial.

Es ist Aufgabe der vorliegenden Erfindung, eine Vorrichtung und ein Verfahren zum Herstellen einer wieder lösbaren Verbindung von Gehäuseabschnitten von Russpartikelfiltern zu schaffen. Eine weitere Aufgabe der Erfindung besteht darin, ein einfaches Entfernen und Wiedereinsetzen einer Filtereinheit bei einer Abgasleitung zu ermöglichen, selbst dann, wenn die Platzverhältnisse knapp bemessen sind. Eine weitere Aufgabe der Erfindung besteht darin, die Befestigungsvorrichtung unempfindlich gegen Vibrationen und Abgasgegendrücke auszubilden.

Diese Aufgaben werden gelöst durch eine Vorrichtung und ein Verfahren zum Verbinden von Gehäuseabschnitten bei Russpartikelfiltern sowie eine Spannbride gemäss den Merkmalen der Patentansprüche 1, 6 und 7.

Die erfindungsgemässe Vorrichtung umfasst ein mehrteiliges zylindrisches Gehäuse, wobei die einzelnen Gehäuseabschnitte an der Mantelfläche im Bereich der stirnseitigen Enden umlaufende Wulste bzw. von der Innenseite her eingeprägte Sicken aufweisen. Je zwei aneinander angrenzende Gehäuseabschnitte werden mittels einer jochartigen Spannbride mit je einer klammerartigen Schulter entlang der beiden Längsseiten zusammengehalten. Beim Anziehen der Spannbride drücken deren Schultern federnd von aussen her gegen die an den Gehäuseabschnitten nach aussen ragenden Sickenringe. Die Gehäuseabschnitte werden dadurch koaxial ausgerichtet und gegeneinander gepresst. Ein oder beide Enden bzw. Stirnseiten der rohrartigen Gehäuseabschnitte können einen nach innen ragenden Absatz aufweisen, der die gegenseitige Berührungsfläche vergrössert und die Dichteigenschaften der Verbindung verbessert. Alternativ können die Gehäuseabschnitte auch ohne derartige, den Innendurchmesser verringernde Kragen ausgebildet sein. An der Innenseite der aus Blech oder Edelstahl gefertigten Spannbriden ist zwischen den Schultern ein temperaturbeständiges Dichtband ausgebildet. Dieses überdeckt im montierten Zustand den Spalt zwischen den zusammengefügten Gehäuseabschnitten und wird durch die Spannkraft der Bride von aussen her dicht gegen die Endbereiche der Gehäuseabschnitte gepresst.

Bei einem dreiteiligen Gehäuse kann dessen mittlerer Teil zur Aufnahme des Russpartikelfilters ausgestaltet sein. Nach dem Lösen und verschieben bzw. entfernen der beiden Spannbriden kann dieser mittlere Teil problemlos seitlich bzw. in einer Ebene vertikal zur Gehäuseachse herausgezogen und so von den beiden an die Zufuhr- bzw. Abfuhrleitungen angeschlossenen Endteilen des Gehäuses getrennt werden. Eine Bewegung des mittleren Gehäuseabschnittes in Richtung der Gehäuseachse ist dabei nicht erforderlich. Nach dem Reinigen oder Regenerieren des Filters kann dieser in analoger Weise wieder eingebaut werden. Mit der erfindungsgemässen Befestigungsvorrichtung können Gehäuse für Russpartikelfilter selbst bei engen Platzverhältnissen installiert und wartungsfreundlich ausgebildet werden.

Anhand einiger Figuren wird die Erfindung im Folgenden näher beschrieben. Dabei zeigen
- Figur 1: eine Frontansicht einer Filtereinheit mit einem drei Gehäuseabschnitte umfassenden zylindrischen Gehäuse,
- Figur 2: eine Seitenansicht der Filtereinheit aus figur 1,
- Figur 3: ein Detail des Gehäuses aus Figur 1 im Bereich zweier aneinander angrenzender Gehäuseabschnitte ohne Spannbride,
- Figur 4: einen Querschnitt des Gehäuses aus Figur 1 im Bereich der Verbindungsstelle zweier Gehäuseabschnitte,
- Figur 5: eine Seitenansicht der Spannbride im Bereich eines Spannschlosses,
- Figur 6: eine Aufsicht auf die Spannbride im Bereich des Spannschlosses.
- Figur 7: Einen Querschnitt der Spannbride entlang der Linie A-A in Figur 5.

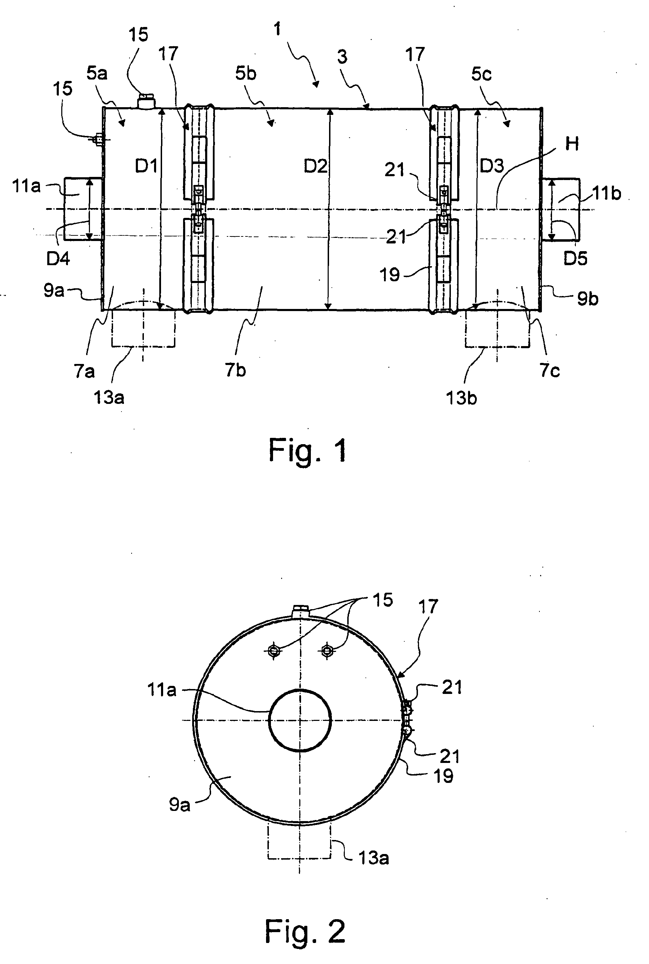

Figur 1 zeigt eine Frontansicht einer Filtereinheit 1 mit einem Gehäuse 3, welches drei Gehäuseabschnitte 5a, 5b, 5c mit im Wesentlichen zylindrischen Mantelflächen 7a, 7b, 7c mit den Aussendurchmessern D1, D2 und D3 umfasst.

Üblicherweise liegen die Aussendurchmesser D1, D2, D3 je nach Anwendung in der Grössenordnung von etwa 100mm bis etwa 400mm. Die stirnseitigen Enden des Gehäuses 5 bzw. des einlassseitigen Gehäuseabschnitts 5a und des auslassseitigen Gehäuseabschnitts 5c sind durch ringförmige Platten 9a, 9b mit je einem koaxial zur Gehäuseachse H angeordneten zylindrischen Anschlussstutzen 11a, 11b mit den Durchmessern D4 und D5 ausgebildet. Diese Durchmesser liegen üblicherweise in der Grössenordnung von etwa 40mm bis etwa 150mm. Alternativ könnten an den Gehäuseabschnitten 5a und 5c auch radial an den jeweiligen Mantelflächen 7a, 7c vorstehende Anschlussstutzen 13a, 13b ausgebildet sein, wie dies in den Figuren 1 und 2 durch unterbrochene Linien dargestellt ist. Selbstverständlich wären bei dieser Variante im Bereich der Anschlussstutzen 13a, 13b Durchtrittsöffnungen in den Mantelflächen 7a, 7c ausgebildet und die das Gehäuse 5 seitlich abschliessenden Platten 9a, 9b geschlossen. Die Form, Anordnung und Grösse der Anschlussstutzen 11a, 11b richtet sich nach den Gegebenheiten der jeweiligen Abgasleitung, in welche die Filtereinheit 1 (in der Regel durch Verschweissen) eingebaut werden soll.

Die Erfindung umfasst beliebige weitere Ausgestaltungen von Gehäusen 5, wobei diese mindestens zwei aneinander angrenzende Gehäuseabschnitte 5a, 5b bzw. 5b, 5c umfassen, und bei denen diese Gehäuseabschnitte 5a, 5b, 5c zumindest in den aneinander angrenzenden Bereichen im Wesentlichen eine zylindrische Gestalt aufweisen. Im in den Figuren 1 bis 4 dargestellten Ausführungsbeispiel umfassen alle Gehäuseabschnitte 5a, 5b, 5c ein zylindermantelartig geformtes Stahlblech der Stärke 1.25mm. Die Wandstärke der Abschlussplatten 9a, 9b beträgt 3mm. Selbstverständlich sind auch andere Wandstärken bzw. Wandstärkekombinationen möglich. Insbesondere können die Wandstärken der einzelnen Gehäuseabschnitte 5a, 5b, 5c gleich oder unterschiedlich sein. Die Aussendurchmesser D1, D2, D3 der drei zylindrischen Gehäuseabschnitte 5a, 5b, 5c sind im dargestellten Beispiel alle gleich gross. Am ersten Gehäuseabschnitt 5a sind an der Mantelfläche 7a und an der Abschlussplatte 9a z.B. mit Gewinden versehene, verschliessbare Durchführungsöffnungen 15 ausgebildet. Dort können z.B. Anschlusskabel für Sensoren ins Innere des Gehäuses 3 geführt werden.

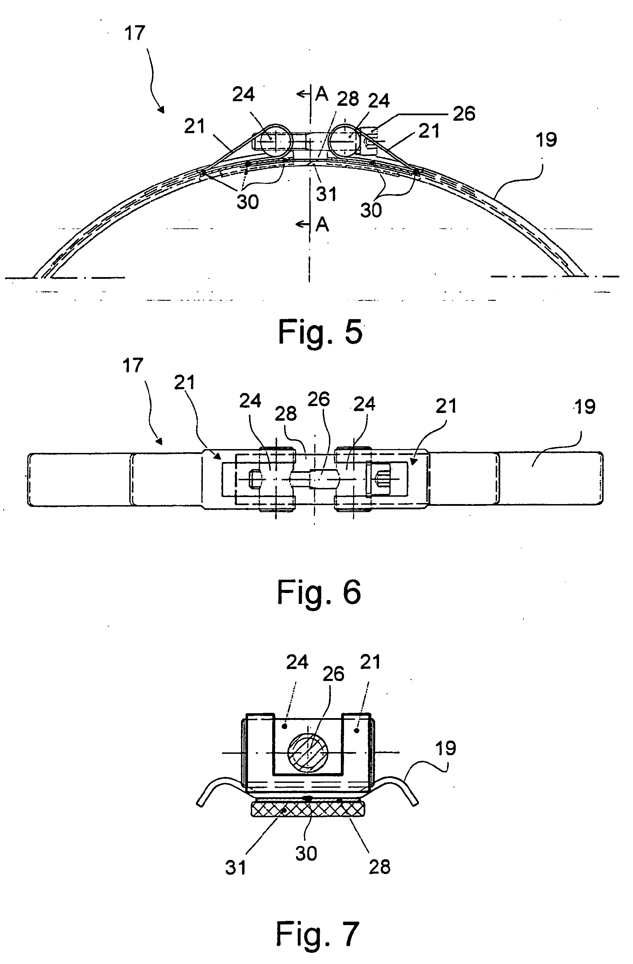

Je zwei benachbarte Gehäuseabschnitte 5a, 5b bzw. 5b, 5c sind durch eine Spannbride 17 wieder lösbar miteinander verbunden. Die Spannbride 17 umfasst ein im Querschnitt jochartiges Band 19 mit an beiden Enden aufgeschweissten metallischen Bandschlaufen 21 zum Aufnehmen je eines zylinderförmigen Einsatzes 24. Diese Einsätze 24 gehören zu einem Spannschloss 22 (Figuren 5, 6 und 7).

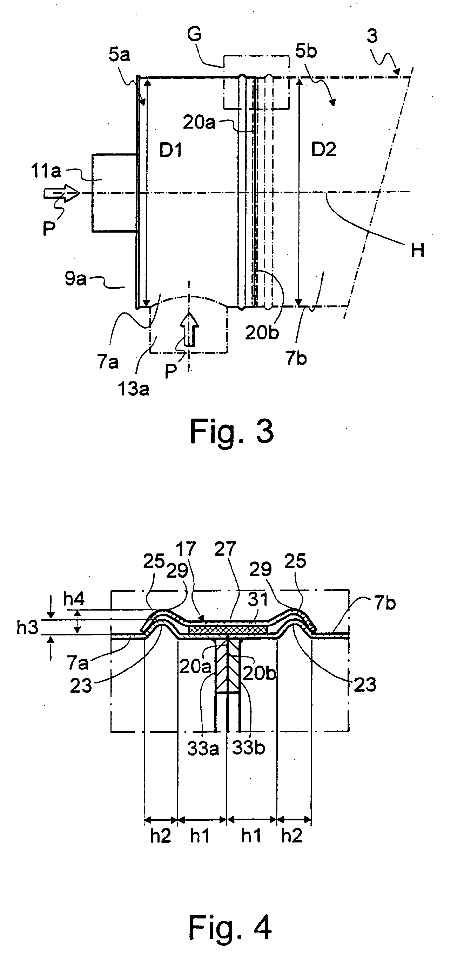

Figur 3 zeigt eine Teildarstellung des Gehäuses 3 mit zwei aneinander grenzenden Gehäuseabschnitten 5a und 5b ohne die Spannbride 17. Die mit "P" markierten Pfeile bei den Anschlussstutzen 11a, 13a zeigen die Strömungsrichtung der

Abgase an. Figur 4 zeigt einen in Figur 3 durch die strichpunktierte Linie G markierten Bereich des Gehäuses 3 als Schnittbild, jedoch diesmal unter Einbezug der Spannbride 17.

Alternativ könnten die Aussendurchmesser D1, D2, D3 der Gehäuseabschnitte 5a, 5b, 5c bzw. der aneinander angrenzenden Bereiche der Gehäuseabschnitte 5a, 5b, 5c auch unterschiedlich sein. In axialen Abständen S1 bzw. S2 von den stirnsertigen, aneinander angrenzenden Enden 20a, 20b zweier Gehäuseabschnitte 5a, 5b sind an den Innenseiten umlaufende Sicken 23 bzw. an den Aussenseiten der Mantelflächen 7a, 7b umlaufende Wulste 25 ausgebildet. Angrenzend an einen mittleren, im Querschnitt etwa geradlinigen Bereich 27 der Spannbride 17 sind beidseitig klammer- oder greiferartige Wölbungen 29 bzw. Schultern ausgebildet, welche beim Anziehen der Spannbride 17 federnd an den Aussenseiten der Wulste 25 anliegen und so die beiden Gehäuseabschnitte 5a, 5b in Richtung der Gehäuseachse H zusammendrücken und gleichzeitig relativ zueinander ausrichten. In analoger Weise könnten auch andere beabstandet zu den Gehäuseabschnittsenden 20a, 20b bzw. Fügestellen angeordnete, an den Mantelflächen 7a, 7b vorstehende und/oder in diese eingelassene Verformungen als Anschlag für korrespondierende Strukturen bzw. Verformungen an der Spannbride 17 für das überlappungsfreie Verbinden der Gehäuseabschnitte 5a, 5b genutzt werden. Anstelle von Verformungen der Mantelflächen 7a, 7b könnten z.B. auch Ringe oder andere Strukturen mit den Mantelflächen 7a, 7b verschweisst und als Anlageelemente für die klammerartigen Kanten der Spannbriden 17 genutzt werden.

Die aneinander anstossenden Enden 20a, 20b der Gehäuseabschnitte 5a, 5b sind-im Beispiel von Figur 4 mit nach innen ragenden Absätzen 33a, 33b versehen, wodurch eine grössere Anlagefläche für die beiden Gehäuseabschnitte 5a, 5b entsteht. Die Fügestelle bzw. der Spalt 35 zwischen den beiden Gehäuseteilen 5a, 5b kann zusätzlich durch ein Dichtband 31 aus Keramik, Glasfasern oder einem anderen thermisch beständigen Material abgedichtet werden. Wie in Figur 4 dargestellt, wird dieses Dichtband 31 zwischen der Spannbride 17 und den reifenartigen Endbereichen der Gehäuseabschnitte 5a, 5b beim Anziehen der Spannbride 17 festgeklemmt. Das Dichtband 31 kann z.B. an der Innenseite des Bandes 19 mittels eines temperaturbeständigen Klebers befestigt sein. Die Ansatzstellen für die Sicken 23 oder Wulste 25 sind in einem axialen Abstand h1 (vorzugsweise 1mm < h1 < 50mm, z.B. h1 = 12mm) von den jeweiligen Enden 20a, 20b der Gehäuseabschnitte 5a, 5b angeordnet. Die Sicken 23 oder Wulste 25 haben eine Breite h2, wobei die Stelle mit dem maximalen Höhe h3 des Wulstes 25 bzw. der maximalen Tiefe h3 der Senke der Sicken 23 in der Regel etwa mittig angeordnet ist. In der Regel genügt eine Höhe h3 in der Grössenordnung von wenigen Millimetern, beispielsweise 3mm. Die Geometrie der Spannbride 17 ist so auf die Masse und Form der aneinander angrenzenden Gehäuseabschnitte 5a, 5b ausgerichtet, dass - im Falle von an den Mantelflächen 7a, 7b nach aussen ragenden Wulsten 25 - die Wölbungen 29 die Wulste 25 umgreifen und die Gehäuseabschnittsenden 20a, 20b und gegebenenfalls die Absätze 33a, 33b relativ zueinander bzw. koaxial ausrichten und gegeneinander pressen. Ausserhalb der Anzugsvorrichtung der Spannbride 17 hat die Verbindungsvorrichtung somit einen sehr geringen Überstand h4 von z.B. 5mm bis 10mm, vorzugsweise weniger als 7.5mm, über die Aussendurchmesser D1, D2, D3 der Gehäuseabschnitte 5a, 5b, 5c. Dadurch ist ein Ein- und Ausbau selbst unter beengten Platzverhältnissen möglich. Dies gilt analog auch im Falle von Haltestrukturen in Gestalt von Sicken 23, die von der Aussenseite her in die Mantelflächen 7a, 7b, 7c der Gehäuseabschnitte 5a, 5b, 5c eingelassen sind. In diesem Fall sind die Wölbungen 29 entlang der Längsseiten des Bandes 19 derart an die Gestalt der Mantelflächen 7a, 7b, angepasst, dass sie beim Anziehen der Spannbride 17 in die Sicken 23 der aneinander angrenzenden Gehäuseabschnitte 5a, 5b eingreifen, dadurch die Gehäuseabschnitte 5a, 5b koaxial ausrichten und gegeneinander pressen (nicht dargestellt). Die Spannbride 17 muss somit lediglich in die Sicken 23 eingreifende Bereiche aufweisen. Ein Überlappen bzw. Übergreifen der Sicken 23 in axialer Richtung ist nicht zwingend erforderlich.

Die Bandlänge der Spannbride 17 richtet sich nach dem Aussendurchmesser D1, D2, D3 der zu verbindenden Gehäuseabschnitte 5a, 5b, 5c. Sie ist vorzugsweise so bemessen, dass bei gespannter Spannbride 17 ein Abstand von wenigen Millimetern bis zu einigen Centimetern - je nach Umfang der zu umschliessenden Mantelflächen (7a, 7b) - zwischen den beiden stirnseitigen Enden des Bandes 19 verbleibt. Figur 5 zeigt eine Seitenansicht der Spannbride 17 im Bereich des Spannschlosses 22, Figur 6 eine Aufsicht dieser Spannbride 17 und Figur 7 einen Querschnitt der Spannbride 17 entlang der Linie A-A in Figur 5. Der erste Einsatz 24 umfasst eine radiale Durchbohrung zum Durchführen einer Schraube 26. Der zweite Einsatz 24 ist als Mutter mit einem Innengewinde für die Schraube 26 ausgebildet. Beim Anziehen der Schraube 26 verringert sich der Durchmesser des zu Ringform gebogenen Bandes 19. An der Unterseite des Bandes 19 ist im Bereich des einen Bandendes eine dieses Bandende überlappende Zunge 28 durch Schweisspunkte 30 mit dem Band 19 verbunden (sichtbar sind auch die Schweisspunkte 30 zwischen dem Band 19 und den Bandschlaufen 21 an der Oberseite des Bandes 19). Die Zunge 28 überlappt das Bandende und untergreift das gegenüberliegende andere Bandende, ohne jedoch fest mit diesem Verbunden zu sein. Die Zunge 28 dient als Anlage für das Dichtband 31.

Bei alternativen Ausgestaltungen kann die Länge des Bandes 19 so bemessen sein, dass sich deren beide stirnseitigen Enden bei korrekt angezogener Spannbride 17 gerade berühren oder nur noch einen kleinen Zwischenraum im Bereich von Millimetern frei lassen. Bei einer weiteren alternativen Ausgestaltung könnten sich die beiden Enden des Bandes 19 auch überlappen.

Russpartikelfilter, die in ein Gehäuse 3 mit mehreren erfindungsgemäss verbindbaren Gehäuseabschnitten 5a, 5b, 5c eingebaut sind, können auf einfache Weise ausgebaut, gereinigt und anschliessend wieder eingebaut werden. Nach dem Lösen der Spannbriden 17 können diese axial verschoben werden, damit sie die Verbindungsstellen nicht mehr überdecken. Alternativ könnten die Spannbriden 17 auch vollständig geöffnet und entfernt werden. Weil sich benachbarte Gehäuseabschnitte 5a, 5b, 5c nicht überlappen, kann der mittlere Gehäuseabschnitt 5b, der nicht fest an Abgasleitung angeschlossen ist, ohne axiales Verschieben seitlich bzw. radial hervorgezogen und vom Rest des Gehäuses 3 getrennt werden. Nach der Reinigung bzw. Wartung des Filterelements, welches im mittleren Gehäuseabschnitt 5b angeordnet ist, kann dieser Gehäuseabschnitt 5b in umgekehrter Reihenfolge wieder in das Gehäuse 3 integriert werden.

## Patentansprüche

1. Vorrichtung zum Verbinden benachbarter Gehäuseabschnitte (5a, 5b) bei Russpartikelfiltern, wobei jeder dieser Gehäuseabschnitte (5a, 5b) einen verbindbaren Endbereich mit einem Gehäuseabschnittsende (20a, 20b) und mit einer zylinderartigen Mantelfläche (7a, 7b) umfasst, und wobei jeder dieser Endbereiche Haltestrukturen für eine Spannbride (17) zum Verbinden aneinander angrenzender Endbereiche der benachbarten Gehäuseabschnitte (5a, 5b) umfasst, **dadurch gekennzeichnet, dass** die Haltestrukturen axial beabstandet zu den Gehäuseabschnittsenden (20a, 20b) angeordnet sind, dass die Endbereiche der benachbarten Gehäuseabschnitte (5a, 5b) zwischen den Haltestrukturen und den Gehäuseabschnittsenden (20a, 20b) eine zylindrische Mantelfläche (7a, 7b) umfassen, und dass diese Endbereiche axial aneinander grenzend überlappungsfrei miteinander verbindbar sind.

2. Vorrichtung nach Anspruch 1, **dadurch gekennzeichnet, dass** die zylinderartigen Mantelflächen (7a, 7b) gleiche Aussendurchmesser D1, D2 aufweisen, und dass die Haltestrukturen an diesen Mantelflächen (7a, 7b) vorstehende Wulste (25) und/oder in diese Mantelflächen (7a, 7b) von der Innenseite oder der Aussenseite her eingelassenen Sicken (23) umfassen.

3. Vorrichtung nach einem der Ansprüche 1 oder 2, **dadurch gekennzeichnet, dass** die Spannbride (17) ein reifenförmig gebogenes Band (19) umfasst, dessen Querschnitt jochartig mit einem geradlinigen Bereich (27) und beidseitig daran anschliessenden Wölbungen (29) ausgebildet und derart an die Gestalt der aneinander angrenzenden Endbereiche der Gehäuseabschnitte (5a, 5b) angepasst ist, dass der geradlinige Bereich (27) des Bandes (19) beim Anziehen der Spannbride (17) von aussen her radial gegen die zylinderartigen Mantelflächen (7a, 7b) zwischen den Haltestrukturen der beiden Gehäuseabschnitte (5a, 5b) pressbar ist, und dass die Wölbungen (29) des Bandes (19) beim Anziehen der Spannbride (17) zum koaxialen Ausrichten und Gegeneinanderpressen der Gehäuseabschnittsenden (20a, 20b) gegen die Haltestrukturen pressbar sind.

4. Vorrichtung nach Anspruch 3, **dadurch gekennzeichnet, dass** an der Innenseite des Bandes (19) zwischen den Wölbungen (29) ein Dichtband (31) angeordnet oder am Band (19) befestigt ist

5. Vorrichtung nach einem der Ansprüche 3 oder 4, **dadurch gekennzeichnet, dass** der Überstand h4 der Spannbride (17) über die Mantelflächen (7a, 7b) im angezogenen Zustand der Spannbride (17) weniger als 10mm beträgt.

6. Spannbride (17) für eine Vorrichtung zum Verbinden zweier Gehäuseabschnitte (5a, 5b) nach Anspruch 1, umfassend ein reifenförmig gebogenes Band (19), dessen Querschnitt jochartig mit einem geradlinigen Bereich (27) und beidseitig daran anschliessenden Wölbungen (29) ausgebildet ist, und ein Spannschloss (22) zum Zusammenziehen der Enden des Bandes (19), **dadurch gekennzeichnet, dass** an einem der Bandenden eine dieses Bandende überlappende und das gegenüberliegende Bandende untergreifende Zunge (28) ausgebildet ist, und dass an der Innenseite des Bandes (19) und der Zunge (28) ein Dichtrand (31) zum Abdichten der Fügestelle der beiden Gehäuseabschnitte (5a, 5b) ausgebildet ist.

7. Verfahren zum Verbinden benachbarter Gehäuseabschnitte (5a, 5b) bei Russpartikelfiltern mit einer Vorrichtung gemäss Anspruch 3, **dadurch gekennzeichnet, dass** die Gehäuseabschnitte (5a, 5b,) relativ zueinander so ausgerichtet werden, dass die Gehäuseabschnittsenden (20a, 20b) überlappungsfrei aneinander anstossen, dass die Spannbride (17) derart ausgerichtet und angezogen wird, dass der geradlinige Bereich (27) des Bandes (19) oder ein an der Innenseite des Bandes (19 angeordnetes Dichtband (31) von aussen her radial gegen die zylinderartigen Mantelflächen (7a, 7b) zwischen den Haltestrukturen der beiden Gehäuseabschnitte (5a, 5b) gepresst wird, und dass die Wölbungen (29) des Bandes (19) beim Anziehen der Spannbride (17) derart gegen die Haltestrukturen gepresst werden, dass die Gehäuseabschnittsenden (20a, 20b) koaxial ausgerichtet und gegeneinander gepresst werden.

## Claims

1. A device for connecting adjacent housing sections (5a, 5b) with regard to soot particle filters, wherein each of these housing sections (5a, 5b) comprises a connectable end region with a housing section end (20a, 20b) and with a cylinder-like outer surface (7a, 7b), and wherein each of these end regions comprises holding structures for a clamping fixture (17) for connecting end regions of the adjacent housing sections (5a, 5b), said end regions being adjacent to one another, **characterised in that** the holding structures are arranged axially distanced to the housing section ends (20a, 20b), that the end regions of the adjacent housing sections (5a, 5b) between the holding structures and the housing section ends (20a, 20b) have a cylindrical outer surface (7a, 7b) and that these end regions may be connected to one another in a manner which is axially adjacent one another without overlapping.

2. A device according to claim 1, **characterised in that** the cylinder-like outer surfaces (7a, 7b) have the same outer diameters D1, D2, and that the holding structures on these outer surfaces (7a, 7b) comprise projecting bosses (25) and/or beads (23) which are admitted into these outer surfaces (7a, 7b) from the inner side or the outer side.

3. A device according to one of the claims 1 or 2, **characterised in that** the clamping fixture (17) comprises a strip (19) which is bent in a hoop-like manner and whose cross section is designed in a yoke-like manner with a straight-lined region (27) and curvatures (29) connecting thereto on both sides and is adapted to the shape of the end regions of the housing sections (5a, 5b) which are adjacent one another, in a manner such that the straight-lined region (27) of the strip (19), on tightening the clamping fixture (17), may be pressed from the outside radially against the cylinder-like outer surfaces (7a, 7b) between the holding structures of the two housing sections (5a, 5b), and that the curvatures (29) of the strip (19) on tightening the clamping fixture (17) may be pressed against the holding structures for the coaxial alignment of the housing section ends (20a, 20b) and for pressing these against one another.

4. A device according to claim 3, **characterised in that** a sealing strip (31) is arranged or fastened on the strip (19), on the inner side of the strip (19) between the curvatures (29).

5. A device according to one of the claims 3 or 4, **characterised in that** the overlap h4 of the clamping fixture (17) beyond the outer surfaces (7a, 7b) in the tightened condition of the clamping fixture (17) is less than 10 mm.

6. A clamping fixture (17) for a device for connecting two housing sections (5a, 5b) according to claim 1, comprising a strip (19) which is bent in a hoop-like manner and whose cross section is designed in a yoke-like manner with a straight-lined region (27) and curvatures (29) connecting thereto on both sides, and a tensioner (22) for tightening the ends of the strip (19), **characterised in that** a tongue (28) is formed on one of the strip ends and overlaps one of these strip ends and engages below the oppositely lying strip end, and that a sealing strip (31) for sealing the joining location of the two housing sections (5a, 5b) is formed on the inner side of the strip (19) and of the tongue (28).

7. A method for connecting adjacent housing sections (5a, 5b) with regard to soot particle filters, with a device according to claim 3, **characterised in that** the housing sections (54a, 5b) are aligned relative to one another such that the housing section ends (20a, 20b) abut one another in a manner which is free of overlapping, that the clamping fixture (17) is aligned and tightened, in a manner such that the straight-lined region (27) of the strip (19), or a sealing strip (31) arranged on the inner side of the strip (19), is pressed from the outside radially against the cylinder-like outer surfaces (7a, 7b) between the holding structures of the two housing sections (5a, 5b) and that the curvatures (29) of the strip (19) on tightening the clamping fixture (17) are pressed against the holding structures in a manner such that the housing sections ends (20a, 20b) are aligned coaxially and are pressed against one another.

## Revendications

1. Dispositif destiné à la liaison de tronçons de boîtier adjacents (5a, 5b) lors des filtres de particules de suie, dans lequel chacun de ces tronçons de boîtier (5a, 5b) comporte une partie terminale qui peut être reliée avec une extrémité de tronçon de boîtier (20a, 20b) et avec une surface de l'enveloppe en forme de cylindre (7a, 7b), et dans lequel chacune de ces zones terminales comporte des structures de maintien pour une bride de serrage (17) pour la liaison des zones terminales adjacentes les unes aux autres des tronçons de boîtier adjacents (5a, 5b), **caractérisé en ce que** les structures de maintien sont agencées avec une distance axiale par rapport aux extrémités de tronçon de boîtier (20a, 20b) et **en ce que** les zones terminales des tronçons de boîtier adjacents (5a, 5b) entre les structures de maintien et les extrémités de tronçon de boîtier (20a, 20b) comportent une surface cylindrique de l'enveloppe (7a, 7b) et **en ce que** ces zones terminales peuvent être reliées axialement entre elles sans chevauchement en adjacence les unes par rapport aux autres.

2. Dispositif selon la revendication 1, **caractérisé en ce que** les surfaces de l'enveloppe (7a, 7b) à la manière d'un cylindre présentent un même diamètre extérieur D1, D2 et **en ce que** les structures de maintien sur ces surfaces de l'enveloppe (7a, 7b) comportent des bourrelets en saillie (25) et/ou des creux (23) ménagés dans ces surfaces de l'enveloppe (7a, 7b) depuis la face intérieure ou depuis la face extérieure.

3. Dispositif selon l'une ou l'autre des revendications 1 et 2, **caractérisé en ce que** la bride de serrage (17) comporte une bande cintrée en forme de pneu (19) dont la section transversale est réalisée à la manière d'un joug avec une zone en ligne droite (27) et des voûtes qui viennent s'y raccorder sur les deux côtés (29) et est adaptée de telle sorte à la conformation des zones terminales adjacentes les unes aux autres des tronçons de boîtier (5a, 5b) que la zone en ligne droite (27) de la bande (19) peut être pressée lors du serrage de la bride de serrage (17) depuis l'extérieur radialement contre les surfaces de l'enveloppe (7a, 7b) à la manière d'un cylindre entre les structures de maintien des deux tronçons de boîtier (5a, 5b) et **en ce que** les voûtes (29) de la bande (19) peuvent être pressées lors du serrage de la bride de serrage (17) envers l'orientation coaxiale et le pressage les unes contre les autres des extrémités de tronçon de boîtier (20a, 20b) contre les structures de maintien.

4. Dispositif selon la revendication 3, **caractérisé en ce que**, sur la face intérieure de la bande (19) entre les voûtes (29), un bande d'étanchéité (31) est agencée ou est fixée sur la bande (19).

5. Dispositif selon l'une ou l'autre des revendications 3 et 4, **caractérisé en ce que** la saillie h4 de la bride de serrage (17) se monte à moins de 10 mm au-delà des surfaces de l'enveloppe (7a, 7b) dans l'état tiré de la bride de serrage (17).

6. Bride de serrage (17) pour un dispositif destiné à la liaison de tronçons de boîtier (5a, 5b) selon la revendication 1, laquelle comporte une bande cintrée à la manière d'un pneu (19) dont la section transversale est réalisée à la manière d'un joug avec une zone en ligne droite et avec des voûtes (29) qui viennent s'y raccorder des deux côtés, et laquelle comporte un cadenas (22) pour le resserrement des extrémités de la bande (19), **caractérisée en ce que**, sur une des extrémités de la bande, une languette (28) qui vient se chevaucher sur cette extrémité de bande et qui vient se loger sous l'extrémité de bande opposée est réalisée et **en ce que**, sur le côté intérieur de la bande (19) et de la languette (28), une bande d'étanchéité (31) est réalisée pour étancher les endroits de jonction des deux tronçons de boîtier (5a, 5b).

7. Procédé destiné à la liaison de tronçons de boîtier adjacents (5a, 5b) lors des filtres de particules de suie, lequel comporte un dispositif conformément àla revendication 3, **caractérisé en ce que** les tronçons de boîtier (5a, 5b) sont orientés relativement l'un par rapport à l'autre de telle sorte que les extrémités des tronçons de boîtier (20a, 20b) viennent s'abouter l'une à l'autre sans chevauchement et de telle sorte que la bride de serrage (17) est orientée et est tirée de telle sorte que la zone en ligne droite (17) de la bande (19) ou une bande d'étanchéité (31) agencée sur le côté intérieur de la bande (19) est pressée radialement depuis l'extérieur contre les surfaces de l'enveloppe (7a, 7b) à la manière d'un cylindre entre les structures de maintien des deux tronçons de boîtier (5a, 5b) et **en ce que** les voûtes (29) de la bande (19) sont pressées lors du resserrement de la bride de serrage (17) contre les structures de maintien de telle sorte que les extrémités des tronçons de boîtier (20a, 20b) sont orientées de manière coaxiale et sont pressées l'une contre l'autre.
